# EUROPEAN PATENT SPECIFICATION

(11) **EP 2 046 079 B1**
(45) Date of publication and mention of the grant of the patent: **18.09.2013**
(21) Application number: 08158523.4
(22) Date of filing: 18.06.2008
(51) Int. Cl.: H04L 29/08, H04W 4/02, G06Q 30/02, H04W 4/12, H04W 8/12, H04W 64/00

(54) **Method and system for managing delivery of communications**
Verfahren und System zur Verwaltung von Kommunikationslieferung
Procédé et système de gestion de livraison de communications

(30) Priority: 08.11.2007 GB 0721921; 18.06.2007 US 936094 P
(43) Date of publication of application: 08.04.2009
(73) Proprietor: Apple Inc., Cupertino, CA 95014 (US)
(72) Inventor: Ahtisaari, Marko, 00530 Helsinki (FI); Ahopelto, Timo, 00120 Helsinki (FI); Romppanen, Timo, 00530 Helsinki (FI); Antikainen, Ismo, 02430 Masala (FI)
(74) Representative: Barton, Russell Glen

(56) References cited:
- EP-A- 1 253 542
- US-A- 5 678 179
- US-A1- 2002 032 771
- US-A1- 2005 021 853

## Description

### Field of the Invention

The present invention relates generally to methods and systems for managing delivery of communications to mobile devices and more particularly to methods and systems for managing delivery of messages to subscribers of a mobile telephone operator.

### Background of the Invention

Usage of cellular or mobile telephones is very popular and common. In a typical arrangement for use of a mobile telephone, a user subscribes to a mobile telephone service offered by a mobile telephone operator or carrier and enters into, for example, a pre-paid or post-paid plan with the mobile telephone operator. A pre-paid subscription plan is usually an arrangement where the user pays in advance for the telephone services to be used over a future period of time. A post-paid subscription plan is usually an arrangement where the user pays for the telephone services after using the services.

The services available using the mobile telephone may be voice services (i.e., making and receiving telephone calls), messaging services such as Short Message Service (SMS), Multimedia Message Service (MMS), data services such as Internet browsing or Wireless Application Protocol (WAP) browsing, video calls, downloading content, streaming content, purchasing applications such as games or other software, using location, guidance or navigation services, finding information, and communicating with a group of people and others.

The popularity of mobile telephones has also enabled their use, along with related infrastructure, as a media for providing mobile marketing, i.e., advertisements to the users of the telephones.

An issue arises when advertisements of a mobile marketing campaign are sent to the mobile telephones of subscribers who are not using their home communications network operated by the mobile telephone operator, e.g., they are using a roaming network such as an international roaming network. Often, the roaming charges for sending the advertisement which are typically paid by the mobile telephone operator are higher than the mobile telephone operator's revenue from the delivery of the advertisement, which is paid by the advertiser. Although a Home Location Register (HLR) managed by the mobile telephone operator indicates the subscriber's roaming status, it does not affect the communications to the subscriber and therefore does not prevent the forwarding of the advertisements to the roaming subscriber.

EP1253542A2 describes a system for use with the internet in which provision of advertisements to a user device capable of determining its geographical location is varied according to the determined geographical location.

US2005/021853 describes another internet-based system in which a geographical location of a user is determined by analysing hops in a trace-route; provision of content from a website may then be varied according to the determined location and/or other factors such as connection speed and bandwidth.

### Summary of the Invention

The present invention is directed at least in part to a method and system for managing delivery of communications comprising content from a content provider to a mobile communications device wherein communications are delivered selectively based on an identified delivery parameter, the parameter being identified on the basis of a determination of whether a communications network being used by the user is a home network or a roaming network, and being specified by a content provider having an allocation of resource usage associated therewith, wherein delivery of communications from the content providers is offset against the allocation of resource usage. The network being used by the user is determined on the basis of a notification or indication of network usage from a monitoring or determining system, such as an HLR. This provides an efficient tool for managing communications and resources associated therewith.

In one embodiment, delivery of content to an internationally roaming subscriber is prevented or blocked by ascertaining the roaming status of the subscriber using the HLR and maintaining this roaming status in a message delivery gateway. More specifically, on the basis of the roaming status, the resource usage required to deliver the content is compared with resource usage available for delivery of the content, the latter being assessed on the basis of resource usage allocated to the provider of the content. The assessment is preferably performed prior to delivering the content to subscribers, and in the event that the required resource usage can be offset against the allocated resource usage, the content is delivered.

### Brief Description of the Drawings

The invention, together with further objects and advantages thereof, may best be understood by reference to the following description taken in conjunction with the accompanying drawings, wherein like reference numerals identify like elements, and wherein:
Fig. 1 is a schematic of an exemplifying architecture of an advertisement system in accordance with the invention.
Fig. 2 is a schematic of a communications arrangement for use in an advertisement system and method in accordance with the invention.

### Detailed Description of the Invention

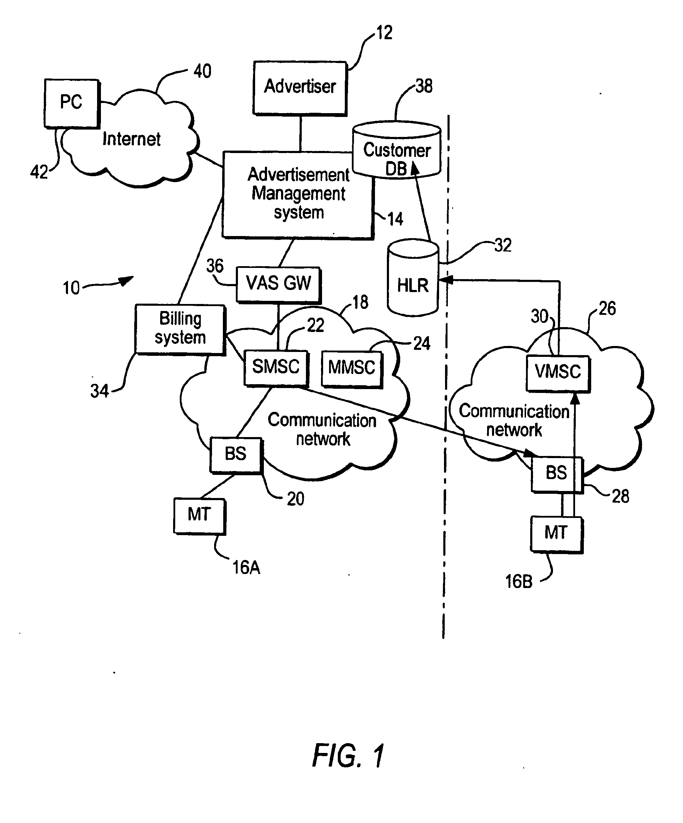

Referring to the accompanying drawings wherein the same reference numerals refer to the same or similar elements, Fig. 1 shows an architecture of an embodiment of a mobile telephone advertising management system in accordance with the invention which is designated generally as 10. System 10 may be implemented to provide subsidized or even free mobile telephones services, the subsidy being provided by advertisers whose advertisements are being directed to subscribers of the mobile telephone service.

The system 10 includes one or more advertisers 12, defined to include any and all entities or individuals that want to advertise products or services to customers participating in the mobile marketing arrangement, and an advertisement management system 14 that is operated by, for example, an advertising delivery company.

Advertisers 12 can thus refer to a brand owner, a service provider, an advertisement agent, a merchant or any other party that wants to provide advertisements to consumers. Advertisements can be commercial, such as a product or service promotion, or non-commercial, such as a general information service notification.

Typically, the operator of the advertisement management system 14 is a company in the business of delivering advertisements from several advertisers, i.e., it is the intermediary between advertisers and the operators of the advertisement distribution channels. Operation of the advertisement management system 14 is typically managed over an Internet interface, but other systems of operation are foreseen.

The advertisement management system 14 preferably includes tools for each advertiser to define rules of their advertisement campaign, i.e., to enable them to tailor the advertisement campaign to their specific desires. This may include reserving, programming and/or booking an advertising campaign via an Internet interface. Parameters which are determined include, but are not limited to, the time period or periods when to send advertisements, the duration of the advertising campaign, the target group or groups, demographics of the target group(s), the format or type of advertisement, the target price level or cost per advertisement or for the advertising campaign in its entirety, the sociological background of the target audience, demographics of the target group(s) including, for example, age, sex and income level(s), target telephone type, etc. In addition to determining the rules, each advertiser 12 typically provides one or more actual advertisements in the form of data, text, pictures, video, audio, html-documents, links, television content, videos, HTML, xHTML, WAP pages, web pages, etc., or any digital content compatible for reception and display by the users' mobile terminals 16A, 16B.

An advertisement can be delivered to the users' mobile terminals 16A, 16B via a communications network 18. The communications network 18 may be any cellular, broadcast, wide area, local area or Internet network. For example, Fig. 1 shows a typical layout of a cellular communications network 18 including one or more base stations (BS) 20, a Short Message Service Center (SMSC) 22 and a Multimedia Message Service Center (MMSC) 24. Communications network 18 can also be a combination of different communications networks such as a Wireless Local Area Network (WLAN) and a Wideband Code Division Multiplex (WCDMA) network.

Communications network 18 can utilize any cellular network technologies which include, but are not limited to, GSM, WCDMA, CDMA, GPRS. In addition to traditional cellular networks, local area networks such as Wireless Local area networks (WLAN), BlueTooth (BT) and other technologies such as WiMax, Broadcasting over DVB-H, ISDB-T, DMB or broadcasting over cellular can be used to deliver advertisements. The communications network 18 can also be a generic Internet access network using any data transport methods. Using the foregoing networks, the advertisements from advertisers 12 can be SMS, MMS, WAP Push, Web pages, or any digital object.

Subscribers to the mobile telephone operator using the mobile terminals 16A, 16B can use the same communications network or another communications network as the communications network 18 being used to deliver advertisements from advertisers 12 via the advertisement management system 14, i.e., a hybrid network is possible. In a preferred embodiment, the communications network 18 is a cellular network and the users' mobile terminals 16A, 16B are mobile devices such as a mobile telephone, a multimedia computer, a multimedia communication device, a PDA or a laptop computer.

The communications network 18 can be considered as the home communications network of the users of the mobile terminals 16A, 16B. At times, for example, when a user's mobile terminal 16B is unable to access the home communications network 18, the user's mobile terminal 16B must access a roaming communications network 26. Roaming network 26 is any non-home communications network where the user's mobile terminal cannot access the home communications network 18, for example, when the user is visiting a place not covered by home communications network 18. A common example of this situation is a mobile telephone service subscriber who visits a foreign country and accesses mobile telephone services in the foreign country using a local network in that country.

When the user's mobile terminal 16B accesses roaming network 26, transmissions for mobile terminal 16B are sent via a base station 28 of this roaming network 26 from the SMSC 22 of the home communications network 18, when the transmission is a SMS. In the roaming network 26, there may often be a Visited Mobile Switch Center (VMSC) 30 which provides location updates of the visiting mobile user to a Home Location Register (HLR) 32 of the home communications network 18.

When the user of mobile terminal 16B uses roaming network 26, there is typically a different, higher cost incurred to send and receive communications, in contrast to use of the home communications network 18 by the same user. The higher cost is for the sending and receiving of most if not all communications including messages such as marketing messages sent from the advertisement management system 14 to the mobile terminal 16B. Other than marketing messages from advertisement management system 14, communications to and from the user of mobile terminal 16B which incur a higher cost may be those to or from any other user and/or computer system, regardless of the form of the communication, i.e., voice, messaging, data and the like.

As shown in Fig. 1, arrangement 10 also includes a billing system 34 coupled to the advertisement management system 14 and/or the communications network 18 or specific parts thereof, i.e., the SMSC 22 as shown in Fig. 1, and may be arranged to monitor and/or meter usage of the communications network 18 by each mobile terminal 16A, 16B and monitor and/or meter usage and payments of or for the advertisements being delivered to each mobile terminal 16a, 16B by the advertisement management system 14. The billing system 34 may be a real-time billing system or a close-to-real-time billing system. The billing system 34 or other suitable means associated with the arrangement 10 can thus arrange for payment from users of the mobile terminals 16A, 16B based on their usage of the communications network 18. Usage of the communications network 18 may entail voice services, messaging services (Short Message Service, Multimedia Message Service, Instant Message Service, Electronic mail services), video telephony services, push-to-talk services, data services such as Internet or Wireless Application Protocol (WAP) browsing services, content usage (television, radio, video) services, download services, among others.

In one embodiment of the invention, billing system 34 meters usage of the services by each user and compares the metered usage with a free or subsidized balance allocated to each user. This free, or subsidized, balance is associated with one or a plurality of content providers, which have reserved an allocation of resource usage for use in subsidizing communications to the users. The reserved allocation can be offset against actual delivery of communications such that the subscriber is not billed for the resource usage. In this manner, although invoices are not sent to the users, the metered usage is compared with business rules associated with the users and the cost for providing the free or subsidized services to the users is invoiced directly or indirectly from content providers based on the amount of resource usage that has been offset by the delivery of communications. Other techniques to provide subsidized or free telephone services to the users are also envisioned.

Arrangement 10 includes a Value Added Service Gateway (VAS GW) 36 that connects communications network 18, or some of the elements thereof such as the SMSC 22 as shown, to the advertisement management system 14. The VAS GW 36 can also be connected to the billing system 34.

Advertisement management system 14 includes a database 38 containing information such as profiles of the users of the mobile terminals 16A, 16B and a set of parameters or rules, and preferences of the users relating, for example, to delivery of advertisements and other messages to the users. An interface to the database 38 can be provided to enable users to modify one or more of their associated delivery parameters, for example, a web interface which enables management of the database 38 via the Internet 40. Typically, this can be done with a personal computer 42 or a mobile telephone which has a Web or Wireless Application Protocol (WAP) browser and an Internet (or WAP) connection. More specifically, the user is enabled to adjust the delivery parameters by means of a computer program in the advertisement management system 14 which manages the database 38 and provides the user interface. Additional details about the computer program are set forth below.

The HLR 32 monitors the communications network which the user's mobile telephone is using, i.e., provides an indication of which communications network the user's mobile telephone is using such as communications network 18 or communications network 26 in the embodiment shown in Fig. 1. There are other systems which perform the same function as the HLR and these other network-determining or monitoring systems are also envisioned to be within the scope and spirit of the invention.

In use, the HLR 32 or other monitoring system would be programmed to trigger roaming status to the advertisement management system 14, i.e., notify the advertising management system 14 that the user's mobile terminal 16B is not communicating using communications network 18 and thus roaming using another operator's communications network. The triggering of the advertisement management system 14 or status notification provided by the HLR 32 may be an indication whether the user is roaming or not, an identification of the location or country in which the user is roaming (which may be made based on the communications network the user is using) and/or an identification of the operator whose communications network the roaming user is using to communicate.

In one embodiment, when the HLR 32 triggers the advertisement management system 14 that the user is roaming, this may be used by a computer program in the advertisement management system 14 to consider whether or not to direct an advertisement message to the user. There may be several conditions that must be satisfied in order to allow an advertisement message to be directed to the user when roaming.

One is that the advertisement management system 14 is set to prevent advertisement messages from being sent to users when roaming. That is, the advertisement management system 14 may be arranged to prevent delivery of advertisement messages to users when roaming without considering other factors, such as a revenue comparison described below. In this case, a determination would be made not to direct an advertisement message to user in view of the user's roaming status, and the advertisement management system 14 may then direct a message to the VAS GW 36 causing it to stop sending advertisements to the user's mobile terminal 16B as long as the user is roaming.

Another condition for the delivery of the advertisement is that there is at least one advertiser that has allowed for delivery of advertisements to users not using the home communications network, i.e., roaming users. If there are no such advertisers, the communications to the roaming user will either not be subsidized or not permitted.

Another condition for the delivery of the advertisement may be the existence of a favorable revenue comparison. That is, the computer program in the advertisement management system 14 may be arranged to send a message to the billing system 34 when a user is determined to be roaming (using a communications network other than their home communications network 18) to inform the billing system 34 about the roaming for the purpose of, for example, determining the cost of delivering an advertisement to the roaming user.

In one embodiment, the resource usage allocated to a content provider for use in offsetting resources that are required to deliver the advertisements is derived, and compared to the actual resource usage required for delivery of the advertisement to the roaming user. This assessment may, for example, be quantified by means of a revenue analysis, which is to say that the revenue derived from the delivery of the advertisement to the user when the user is roaming is determined and compared to the cost for delivering the advertisement to the roaming user. This comparison may be performed by a computer program resident in the billing system 34 or in the advertisement management system 14. If the revenue derived from the delivery of the advertisement to the user when the user is roaming is less than the cost for delivering the advertisement to the roaming user, then the advertisement management system 14 may prevent the delivery of the advertisement, e.g., by directing a message to the VAS GW 36. Or to put it another way, if the resource usage that is allocated to a given advertiser for use in offsetting actual resource delivery requirements is less than that required to deliver the advertisement, the advertisement management system 14 may prevent the delivery of the advertisement, e.g., by directing a message to the VAS GW 36.

The billing system 34 may be arranged to bill advertisers, or offset their respective resource usage allocation, for delivery of advertisements to users at different rates depending on the roaming status of the users. For example, a computer program in the billing system 34 may determine a subsidized rate for delivery of an advertisement to a user using their home communications network while there would be a non-subsidized rate or higher rate when the user is roaming using another operator's communications network. The billing system 34 would therefore need to know whether the user is roaming in order to determine the appropriate billing, or the amount of resource usage to offset against the allocated resource usage, for delivery of an advertisement to a user.

Another condition for the delivery of the advertisement to a roaming user is whether the delivery has been permitted by the user by setting their delivery parameters. For example, the user can indicate whether they want to receive communications while roaming or not. An indication that a user does not want to receive communications while roaming is considered an indication to prevent or block communications to the user. More specific preferences enable the user to receive or refuse reception of advertisements or messages which may also be or contain advertisements, or messages from the operator of the user's home communications network such as user surveys and opinion polls, in particular when roaming. All of these parameters or preferences can be set by the user using the personal computer 42 connected via the Internet 40 to the database 38 associated with the advertisement management system 14. The user is enabled to adjust the delivery parameters and preferences by means of a computer program in the advertisement management system 14 which manages the database 38 and provides the user interface. Additional details about the computer program are set forth below.

One way to enable the user to control the reception of communications when roaming is to provide a "Pause" preference selectable by the user, for example, present a "pause" button or "holiday" button" to the user's display associated with the personal computer 42. A similar "holiday" button could also be presented at the users' mobile terminals 16A, 16B.

When the user clicks on this "holiday" button, reception of advertisements and other marketing communications is prevented while the user is roaming. The same or a different button may be programmed to enable the user to prevent reception of some or all other types of communications, or from some or all other communication sources. Clicking on the "holiday" button could be effective to suspend delivery of advertisements for a preset period of time, after which advertisements would then be delivered, or indefinitely and require the user to click a "resume" button or similar button to restart delivery of advertisements.

When the conditions may require that the user be available to receive advertisements, messages from the operator of the user's home communications network, and other marketing communications for a set number of days per predetermined period of usage time of the mobile telephone service, there is therefore a limit on the number of days a user can suspend delivery of advertisements, messages from the operator of the user's home communications network, and other marketing communications. The user can be notified of the number of days that they have suspended delivery of advertisements and messages, and the number of days remaining during which they can suspend delivery of advertisements and messages, for the predetermined period of time, when they access the advertisement management system 14 to enter delivery suspension start and stop dates. A user can either be prevented from suspending delivery of advertisements or messages for more than a certain amount of time or can be notified that they will lose their free or subsidized telephone service if they indicate a suspension period longer than permitted.

In one arrangement, when a user suspends delivery of advertisements or messages and other marketing communications, while roaming or for other reasons, the duration of the suspension is not considered in the predetermined period of time during which they must receive, be available to receive or respond to advertisements or messages. Thus, if the user suspends delivery of advertisements or messages for ten days of a thirty day service period, the service period would be extended for ten days and in this extended forty day period, they would have to receive, be available to receive or respond to the same number of advertisements or messages as for a full, consecutive thirty day service period.

If the user suspends delivery of any or all communications while roaming for example, in one embodiment, the advertisement management system 14 stores messages being sent to the user during the suspension period and once the user is subsequently determined to be using the home communications network, these messages are then delivered to the user.

As discussed above, the advertisement management system 14 includes a computer program which enables users to define parameters and preferences for delivery of any communications addressed to them, in particular when roaming. For example, the user could use the interface to the computer program at the advertisement management system 14 to indicate permitted senders of messages, i.e., indicate a desire to receive messages from a list of certain persons, and also indicate non-permitted senders, i.e., indicate a desire to block reception of messages from others (whether specified or unspecified). This procedure could alternatively or additionally include setting up a permission indicator to receive other types of communications such as telephone calls from a list of certain persons or entities while similar communications from others are blocked. Alternatively or additionally, this procedure could entail setting up a list of data or other types of services which can be accessed when roaming.

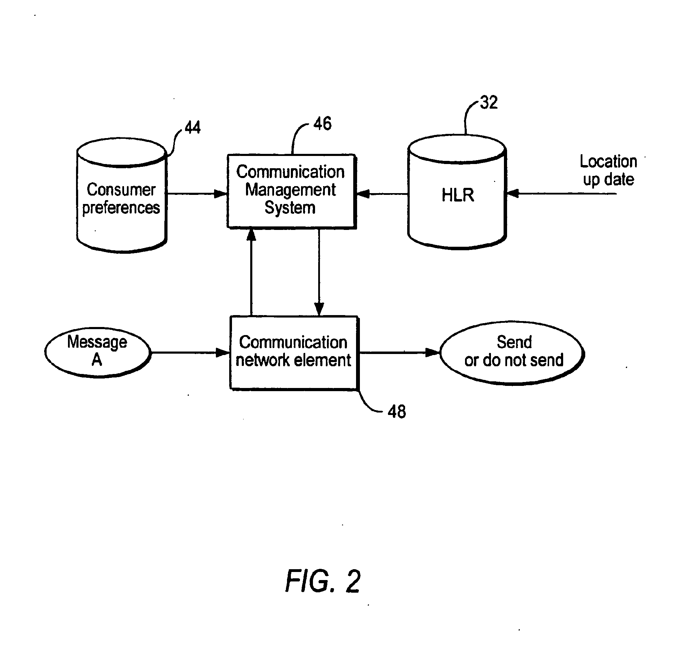

Fig. 2 shows a diagram of exemplary communication management software which may be resident in the advertisement management system 14, or in a separate server connected thereto. Using the software, each user inputs their preferences vis-a-vis reception of communications 44. A communications management system 46 receives the user's preferences from 44 and information about the communications network the user is using from the HLR 32. Based on the user's preferences and the communications network the user is using, the communications management system 46 determines whether or not a message A is to be delivered to the user.

A communication network unit 48 receives message A which informs the communication management system 46 of the message origin and target and/or sends message A and its origin and target to the communication management system 46. The communication management system 46 generates a control message to the communication network unit 48 to allow delivery of the message A to the user or to block such delivery. Blocked messages may be stored in the communication network unit 48 or/and in the communications management system 46, for example, until such time as the user is no longer roaming and is using the home communications network.

Message A, whose delivery is controlled by communications management system 46, can be any type of communicable message capable of being delivered to a mobile device, including but not limited to the following: an SMS message, an MMS message, an WAP push message, a data call, a voice call, a video call, music streaming, video streaming, an advertisement message, a marketing message, a message from a group of people, a message to group of people, a message from an individual person, a message to an individual person, a message from a computer system or systems, and a message to a computer system or systems. Message A can be also a message to a roaming network or from a roaming network.

Several computer programs resident on computer-readable media may be used in the invention. One computer program is resident in the advertisement management system 14 and manages delivery of communications to users' mobile devices, in particular advertisements. The computer program enables users to manage parameters and preferences for delivery of communications to their mobile devices, maintains the parameters and preferences managed by the users in a database, and upon receiving a request to deliver communications to the users, checks the database to ascertain whether the users have permitted or blocked the delivery of such communications. If such communications have been blocked, they will not be delivered.

In the context of this document, computer-readable medium could be any means that can contain, store, communicate, propagate or transmit a program for use by or in connection with the method, system, apparatus or device. The computer-readable medium can be, but is not limited to (not an exhaustive list), electronic, magnetic, optical, electromagnetic, infrared, or semi-conductor propagation medium. The medium can also be (not an exhaustive list) an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM). The medium can also be paper or other suitable medium upon which a program is printed, as the program can be electronically captured, via for example, optical scanning of the paper or other medium, then compiled, interpreted, or otherwise processed in a suitable manner, if necessary, and then stored in a computer memory. Also, a computer program or data may be transferred to another computer-readable medium by any suitable process such as by scanning the computer-readable medium.

The parameters and preferences relating to the delivery of communications may include indications to allow or block specific types of communications and communications from specific sources, as well as indications to allow or block specific types of communications and communications from specific sources when the user is not using their home communications network, i.e., the user is using a roaming network, or even when the user is located in the home communications network but does not want to receive certain types of communications. Different preferences may be created depending on whether the user is roaming or not. As such, each user can allow or block delivery of specific types of communications such as advertisements when roaming, or allow or block communications from specific sources when roaming.

In one embodiment, the computer program enables the users to manage their parameters and preferences using an Internet interface. For example, the computer program may be arranged to present each user with a display on a screen of their computer including a list of senders of communications and allow the user to indicate whether they want to accept or block communications from these senders. Also, a list of different types of communications can be displayed and the user provided with means to allow them to indicate whether they want to accept or block these types of communications. Each user can manage their lists as they desire, e.g., add senders to the lists.

In addition to or instead of the enabling users to set parameters and preferences for delivery of communications to their mobile devices when roaming or otherwise, the computer program may automatically manage delivery of communications to the users based on which communications network they are using. This may be determined by a network-usage determining system, such as a home location register, with the database containing data about the users and an indication of the communications network the users are using. The computer program may manage the network-usage determining system and thus determine which communications network each user is using.

The database may be maintained by the computer program itself or maintained by another computer program and accessed by the computer program. Thus, whenever a request to deliver a communication to a user is received, a determination is made whether to deliver communications to the user by checking the database to ascertain which communications network the user is using and allowing or preventing delivery of communications to the user based on which communications network they are using. Analysis of the type of communication may also be made to prevent delivery of some types of communications, such as advertisements, while allowing delivery of other types of communications, such as service messages.

In this regard, the computer program could associate a communications network as each user's home communications network and other networks as roaming networks and prevent delivery of communications to users using a roaming network. The database could therefore contain an indication of each user's home communications network. This feature would be useful in a situation where the users receive mobile telephone services at a subsidized cost or free in exchange for receiving advertisements, and the cost to deliver the advertisements to users using a roaming network is greater than the revenue gained by the mobile telephone service operator for delivery the advertisement to the user.

The foregoing enables innovative and focused mobile marketing and advertising. This is important because such a concept is considered by advertisers as the next new channel to directly reach consumers since it utilizes core assets and characteristics of the mobile media, namely, it is personal in that it is directed solely to individual consumers, it is "always on" and can reach the consumers whenever they access their communications devices, it is mobile and naturally forms groups of people who communicate actively with each other. These characteristics combined with social networks-based approaches of the Internet could form a very powerful base to execute marketing strategies.

In general, mobile marketing and advertising can be divided into the following four categories: mobile marketing, mobile advertising, mobile direct marketing and mobile customer relation management (CRM). The present invention in any of its forms discussed above is applicable to all categories.

Mobile marketing is commonly considered as the systematic planning, implementing and control of a mix of business activities intended to bring together buyers and sellers for the mutually advantageous exchange or transfer of products or services where the primary point of contact with the consumer is via their mobile device.

Mobile advertising is commonly considered as the paid, public, non-personal announcement of a persuasive message by an identified sponsor as well as the non-personal presentation or promotion by a firm of its products to its existing and potential customers where such communication is delivered to a mobile telephone or other mobile device. Examples of mobile advertising include: Wireless Application Protocol (WAP) Banner ads, mobile search advertising, mobile video bumpers, and interstitial ads in or on device portals.

Mobile direct marketing is commonly considered a sales and promotion technique in which promotional materials are delivered individually to potential customers via the potential customer's mobile telephone or other mobile device. Examples of mobile direct marketing include the sending of Short Message Service (SMS), Multimedia Message Service (MMS) or Wireless Application Protocol (WAP) push messages, Bluetooth messaging and other marketing to mobile telephones or other mobile devices.

Mobile customer relation management is commonly considered as a combination of all the foregoing in a manner that establishes a long-term, engaging relationship between the customer and the marketing or promoting company. At present, mobile marketing and advertising is mostly based on push campaigns to opt-in a consumer mobile number in a database, or pull campaigns that acquire mobile telephone numbers from consumers. The most typical example of the pull campaign is the "text-to-win" campaign where, e.g., a soft drink bottle contains a short code to be sent via text message to a certain telephone number. In return, the consumer receives a notification if they have won with the selected marketing message, or a series of messages is broadcast to their mobile telephone. Other popular methods of direct advertisement are achieved using text and video messaging.

Having described exemplary embodiments of the invention with reference to the accompanying drawings, it will be appreciated that the present invention is not limited to those embodiments, and that various changes and modifications can be effected therein by one of ordinary skill in the art without departing from the scope of the invention as defined by the appended claims.

## Claims

1. A method for managing delivery of communications to at least one user of a mobile communications device (16A, 16B), the mobile communications device being capable of receiving communications from one or more content providers (12) via a home communications network (18) and being capable of receiving communications from the content provider via at least one roaming network (26) different to said home communications network, the method comprising:
determining a communications network being used by a user on the basis of a notification indicative of network usage, the notification being provided by a monitoring system (32) arranged to monitor a network being used by the mobile communications device;
determining whether the communications network being used by the user is said home communications network or a said roaming network;
identifying a prespecified delivery parameter based on the determination of whether the communications network being used by the user is said home communications network or a said roaming network, wherein the delivery parameter is specified by a said content provider, the content provider having an allocation of resource usage associated therewith and wherein delivery of said communications is offset against said allocation of resource usage; and
selectively delivering communications to the user based on the identified delivery parameter, the communications comprising content from the content provider.

2. The method of claim 1, further comprising:
determining a location of the user based on the communications network the user is using; and
maintaining location information about the user in a database (38),
wherein the step of selectively delivering communications to the user comprises accessing the database to determine the location of the user and managing the delivery of communications based on the location of the user.

3. The method of claim 1 or claim 2, wherein the step of selectively delivering communications to the user comprises preventing delivery of communications to the user if it is determined that the user is using a said roaming communications network different than his home communications network.

4. The method of claim 1 or claim 2, further comprising:
deriving available resource usage from resource usage allocated by the content provider for delivery of communications to the user; and
comparing the available resource usage to resource usage required for delivering such communications,
wherein the step of selectively delivering communications to the user comprises managing delivery of communications based on a comparison of available resource usage and a resource requirement for delivering communications to the user using a roaming network.

5. The method of claim 4, wherein the step of selectively delivering communications to the user comprises preventing delivery of communications to the user using a roaming network when the required resource usage for delivery of the communications exceeds the available resource usage.

6. The method of claim 1, further comprising providing the communication services to the user in exchange for a requirement that the user receive communications.

7. The method of any preceding claim, in which the monitoring system comprises a Home Location Register (HLR).

8. The method of any preceding claim, in which the home communications network comprises a cellular network.

9. The method of any preceding claim, in which the communications delivered to the user comprise a short message service (SMS) message and/or a multimedia message service (MMS) message.

10. The method of any preceding claim, in which the mobile telecommunications device comprises a mobile telephone.

11. A system for managing delivery of communications to at least one user of a mobile communications device (16A, 16B), the mobile communications device being capable of receiving communications from one more content providers (12) via a home communications network (18) and being capable of receiving communications from the one or more content providers via at least one roaming network (26) different to said home communications network, the system comprising:
a communications management system (14, 46) arranged to receive communications from content providers for delivery to the user; and
a database (38) containing data relating to a communications network being used by the user, the database being coupled to a determining system (32) for determining which of said communications networks is being used by said mobile communications device, the database being arranged to receive indications of a communications network being used by said mobile communications device from the determining system, wherein the database is coupled to the communications management system and is arranged to provide data indicative of a communications network being used by a user to said communications management system,
said communications management system being arranged to query the database so as to identify a prespecified delivery parameter based on the determination of whether the communications network being used by the user is a home communications network or a roaming network, in which the delivery parameter is specified by a said content provider, the content provider having an allocation of resource usage associated therewith wherein delivery of communications is offset against said allocation of resource usage,
the communications management being further arranged to manage delivery of communications to the user based on the identified delivery parameter, the communications comprising content from the content provider.

12. The system of claim 11, wherein said determining system comprises a home location register (HLR).

13. The system of either of claim 11 or claim 12, wherein the communications delivered to the user comprise content from the content providers.

14. The system of any one of claim 11 to claim 13, wherein said determining system is arranged to determine a country in which the user is situated when roaming, said communications management system being arranged to manage delivery of communications to the user based on the country in which the user is situated when roaming.

15. The system of any one of claim 11 to claim 14, wherein said determining system is arranged to determine an operator of the roaming network being used by the user when roaming, said communications management system being arranged to manage delivery of communications to the user based on the operator of the roaming network being used by the user when roaming.

16. The system of any one of claim 11 to claim 15, wherein said database further includes at least one user-determined preference relating to delivery of communications, said communications management system being arranged to manage delivery of communications to the user based on the communications network being used by the user and the at least one user-determined preference.

17. The system of claim 16, further comprising an interface for enabling the user to interface with said database and manage said delivery preferences.

18. The system of claim 17, wherein said interface includes a user-selectable option for suspending delivery of said communications.

19. The system of any of claim 16 to claim 18, wherein said at least one user-determined delivery preference includes preferences relating to a list of different communication sources from which the user could receive communications and preferences relating to a list of different communication types which the user could receive.

20. The system of claim 16, wherein said communications management system includes a secondary communications management system (48) arranged to manage communications to the user, said secondary communications management system being arranged to receive communications intended for the user, data from the database about the user's delivery preferences and data about the communications network being used by the user from said determining system, to determine whether the communications should be delivered to the user, and if so, to control a communications network node (36) to deliver the communications to the user.

21. The system of claim 20, wherein said secondary communications management system is arranged to receive an indication of the sender and recipient of communications and optionally the communications via the communications network element.

22. The system of claim 11, wherein said communications management system includes tools which enable each content provider to define rules controlling delivery of said communications.

23. The system of any one of claim 11 to claim 22, further comprising resource usage determining means (34) coupled to said communications management system, said resource usage determining means being arranged to receive data identifying the communications network being used by the user and to evaluate resource usage requirements at a first rate for a communication delivered to a user using the home communications network and at a second rate when the user is roaming, wherein said second rate is different to said first rate.

24. The system of any one of claim 11 to claim 23, wherein the home communications network comprises a cellular network.

25. The system of any one of claim 11 to claim 24, wherein the communications delivered to the user comprise one or more of a short message service (SMS) message, a multimedia message service (MMS) message and a WAP Push message.

26. The system of any one of claim 11 to claim 25, wherein the mobile telecommunications device comprises a mobile telephone.

27. A computer program, or a suite of computer programs, comprising a set of instructions arranged to cause a computer, or a suite of computers, to perform the method according to any one of claim 1 to claim 10.

28. A computer readable medium comprising the computer program of claim 27.

## Patentansprüche

1. Verfahren zum Verwalten von Lieferung von Kommunikationen an zumindest einen Nutzer einer mobilen Kommunikationsvorrichtung (16A, 16B), wobei die mobile Kommunikationsvorrichtung fähig ist Kommunikationen von einer oder mehreren Inhaltsanbietern (12) über ein Heimkommunikationsnetzwerk (18) zu empfangen und fähig ist Kommunikationen von dem Inhaltsanbieter über mindestens ein Roaming-Netzwerk (26) zu empfangen, welches unterschiedlich zu dem Heimkommunikationsnetzwerk ist, wobei das Verfahren aufweist:
Bestimmen eines Kommunikationsnetzwerks, welches durch einen Nutzer verwendet wird, auf der Basis einer Benachrichtigung, welche Netzwerknutzung anzeigt, wobei die Benachrichtigung durch ein Überwachungssystem (32) bereitgestellt wird, welches angeordnet ist zum Überwachen eines Netzwerkes, welches durch die mobile Kommunikationsvorrichtung verwendet wird;
Bestimmen, ob das Kommunikationsnetzwerk, welches durch den Nutzer verwendet wird, das Heimkommunikationsnetzwerk oder ein besagtes Roaming-Netzwerk ist;
Identifizieren eines vorspezifizierten Lieferparameters basierend auf der Bestimmung, ob das Kommunikationsnetzwerk, welches durch den Nutzer verwendet wird, das Heimkommunikationsnetzwerk oder ein besagtes Roaming-Netzwerk ist, wobei der Lieferparameter spezifiziert wird durch einen besagten Inhaltsanbieter, wobei der Inhaltsanbieter eine Zuordnung der Ressourcennutzung hat, welche damit assoziiert ist, und wobei die Lieferung der Kommunikationen gegen die Zuordnung der Ressourcennutzung ausgeglichen ist; und
selektives Liefern von Kommunikationen an den Nutzer basierend auf dem identifizierten Lieferparameter, wobei die Kommunikationen Inhalt von dem Inhaltsanbieter aufweisen.

2. Verfahren nach Anspruch 1, weiterhin aufweisend:
Bestimmen eines Ortes des Nutzers basierend auf dem Kommunikationsnetzwerk, welches der Nutzer verwendet; und
Beibehalten von Ortsinformationen über den Nutzer in einer Datenbank (38),
wobei der Schritt des selektiven Lieferns der Kommunikationen an den Nutzer Zugreifen auf die Datenbank aufweist, um den Ort des Nutzers zu bestimmen und die Lieferung der Kommunikationen basierend auf dem Ort des Nutzers zu verwalten.

3. Verfahren nach Anspruch 1 oder Anspruch 2, bei welchem der Schritt des selektiven Lieferns der Kommunikationen an den Nutzer das Verhindern von Lieferung von Kommunikationen an den Nutzer aufweist, wenn bestimmt wird, dass der Nutzer ein Roaming-Kommunikationsnetzwerk verwendet, welches unterschiedlich zu seinem Heimkommunikationsnetzwerk ist.

4. Verfahren nach Anspruch 1 oder Anspruch 2, weiterhin aufweisend:
Ableiten verfügbarer Ressourcennutzung aus Ressourcennutzung, welche durch den Inhaltsanbieter zugeordnet ist, zur Lieferung von Kommunikationen an den Nutzer; und
Vergleichen der verfügbaren Ressourcennutzung mit der Ressourcennutzung, welche für die Lieferung solcher Kommunikationen erforderlich ist,
wobei der Schritt des selektiven Lieferns von Kommunikationen an den Nutzer ein Verwalten von Lieferung von Kommunikationen aufweist basierend auf einem Vergleich von verfügbarer Ressourcennutzung und einem Ressourcenerfordernis zum Liefern von Kommunikationen an den Nutzer, welcher ein Roaming-Netzwerk verwendet.

5. Verfahren nach Anspruch 4, bei welchem der Schritt des selektiven Lieferns von Kommunikationen an den Nutzer das Verhindern von Lieferung von Kommunikationen an den Nutzer, welcher ein Roaming-Netzwerk verwendet, aufweist, wenn die erforderliche Ressourcennutzung zur Lieferung der Kommunikationen die verfügbare Ressourcennutzung überschreitet.

6. Verfahren nach Anspruch 1, weiterhin aufweisend Bereitstellen der Kommunikationsdienste an den Nutzer im Austausch für ein Erfordernis, dass der Nutzer Kommunikationen empfängt.

7. Verfahren nach irgendeinem der vorhergehenden Ansprüche, in welchem das Überwachungssystem ein Heimatregister (HLR) aufweist.

8. Verfahren nach irgendeinem der vorhergehenden Ansprüche, in welchem das Heimkommunikationsnetzwerk ein Mobilfunknetzwerk aufweist.

9. Verfahren nach irgendeinem der vorhergehenden Ansprüche, in welchem die Kommunikationen, welche an den Nutzer geliefert werden, eine Kurznachrichtendienst (SMS)-Nachricht und/oder eine Multimedianachrichtendienst (MMS)-Nachricht aufweisen.

10. Verfahren nach irgendeinem der vorhergehenden Ansprüche, in welchem die mobile Telekommunikationsvorrichtung ein Mobiltelefon aufweist.

11. System zum Verwalten von Lieferung von Kommunikationen an mindestens einen Nutzer einer mobilen Kommunikationsvorrichtung (16A, 16B), wobei die mobile Kommunikationsvorrichtung fähig ist zum Empfangen von Kommunikationen von einem oder mehreren Inhaltsanbietern (12) über ein Heimkommunikationsnetzwerk (18) und fähig ist zum Empfangen von Kommunikationen von den einen oder mehreren Inhaltsanbietern über mindestens ein Roaming-Netzwerk (26), welches unterschiedlich zu dem Heimkommunikationsnetzwerk ist, wobei das System aufweist:
ein Kommunikationsverwaltungssystem (14, 46) angeordnet zum Empfangen von Kommunikationen von Inhaltsanbietern zur Lieferung an den Nutzer; und
eine Datenbank (38), welche Daten enthält, welche sich auf ein Kommunikationsnetzwerk, welches durch den Nutzer verwendet wird, beziehen, wobei die Datenbank an ein Bestimmungssystem (32) gekoppelt ist zum Bestimmen, welche der Kommunikationsnetzwerke durch die mobile Kommunikationsvorrichtung verwendet werden, wobei die Datenbank angeordnet ist zum Empfangen von Hinweisen eines Kommunikationsnetzwerks, welches durch die mobile Kommunikationsvorrichtung verwendet wird, von dem Bestimmungssystem, wobei die Datenbank gekoppelt ist mit dem Kommunikationsverwaltungssystem und angeordnet ist zum Bereitstellen von Daten, welche ein Kommunikationsnetzwerk, welches durch einen Nutzer verwendet wird, an das Kommunikationsverwaltungssystem anzeigen,
wobei das Kommunikationsverwaltungssystem angeordnet ist zum Abfragen der Datenbank, um einen vorspezifizierten Lieferparameter zu identifizieren basierend auf der Bestimmung, ob das Kommunikationsnetzwerk, welches durch den Nutzer verwendet wird, ein Heimkommunikationsnetzwerk oder ein Roaming-Netzwerk ist, in welchem der Lieferparameter durch einen besagten Inhaltsanbieter spezifiziert wird, wobei der Inhaltsanbieter eine Zuordnung von Ressourcennutzung, welche damit assoziiert ist, hat, wobei die Lieferung der Kommunikationen gegen die Zuordnung der Ressourcennutzung ausgeglichen ist,
wobei die Kommunikationsverwaltung weiter angeordnet ist zum Verwalten der Lieferung von Kommunikationen an den Nutzer basierend auf dem identifizierten Lieferparameter, wobei die Kommunikationen Inhalt von dem Inhaltsanbieter aufweisen.

12. System nach Anspruch 11, bei welchem das Bestimmungssystem einen Heimatregister (HLR) aufweist.

13. System nach Anspruch 11 oder Anspruch 12, bei welchem die Kommunikationen, welche an den Nutzer geliefert werden, Inhalt von den Inhaltsanbietern aufweisen.

14. System nach irgendeinem der Ansprüche 11 bis 13, bei welchem das Bestimmungssystem angeordnet ist zum Bestimmen eines Landes, in welchem der Nutzer sich beim Roaming befindet, wobei das Kommunikationsverwaltungssystem angeordnet ist zum Verwalten der Lieferung von Kommunikationen an den Nutzer basierend auf dem Land, in welchem der Nutzer sich beim Roaming befindet.

15. System nach irgendeinem der Ansprüche 11 bis 14, bei welchen das Bestimmungssystem angeordnet ist zum Bestimmen eines Operators des Roaming-Netzwerks, welches durch den Nutzer beim Roaming verwendet wird, wobei das Kommunikationsverwaltungssystem angeordnet ist zum Verwalten der Lieferung von Kommunikationen an den Nutzer basierend auf dem Operator des Roaming-Netzwerks, welches durch den Nutzer beim Roaming verwendet wird.

16. System nach irgendeinem der Ansprüche 11 bis 15, bei welchem die Datenbank weiter mindestens eine nutzerbestimmte Einstellung umfasst, welche sich auf die Lieferung von Kommunikationen bezieht, wobei das Kommunikationsverwaltungssystem angeordnet ist zum Verwalten der Lieferung der Kommunikationen an den Nutzer basierend auf dem Kommunikationsnetzwerk, welches durch den Nutzer verwendet wird und die mindestens eine nutzerbestimmte Einstellung.

17. System nach Anspruch 16, weiterhin aufweisend eine Schnittstelle zum Ermöglichen, dass der Nutzer mit der Datenbank eine Schnittstelle bildet und die Liefereinstellungen verwaltet.

18. System nach Anspruch 17, bei welchem die Schnittstelle eine nutzerauswählbare Option zum Aussetzen der Lieferung der Kommunikationen umfasst.

19. System nach irgendeinem der Ansprüche 16 bis 18, bei welchem die mindestens eine nutzerbestimmte Liefereinstellung Einstellungen umfasst, welche sich auf eine Liste von unterschiedlichen Kommunikationsquellen bezieht, von welchen der Nutzer Kommunikationen und Einstellungen empfangen könnte, welche sich auf eine Liste von unterschiedlichen Kommunikationstypen beziehen, welche der Nutzer empfangen könnte.

20. System nach Anspruch 16, bei welchem das Kommunikationsverwaltungssystem ein sekundäres Kommunikationsverwaltungssystem (48) umfasst, welches angeordnet ist zum Verwalten von Kommunikationen an den Nutzer, wobei das sekundäre Kommunikationsverwaltungssystem angeordnet ist zum Empfangen von Kommunikationen, welche dem Nutzer zugedacht sind, Daten aus der Datenbank über die Liefereinstellungen des Nutzers und Daten über das Kommunikationsnetzwerk, welches durch den Nutzer verwendet wird, von dem Bestimmungssystem, um zu bestimmen, ob die Kommunikationen an den Nutzer geliefert werden sollten, und wenn ja, einen Kommunikationsnetzwerkknoten (36) zu steuern, um die Kommunikationen an den Nutzer zu liefern.

21. System nach Anspruch 20, bei welchem das sekundäre Kommunikationsverwaltungssystem angeordnet ist zum Empfangen eines Hinweises des Senders und des Empfängers der Kommunikationen und optional der Kommunikationen über das Kommunikationsnetzwerkelement.

22. System nach Anspruch 11, bei welchem das Kommunikationsverwaltungssystem Tools umfasst, welche es jedem Inhaltsanbieter ermöglichen Regeln zu definieren, welche die Lieferung der Kommunikationen steuern.

23. System nach irgendeinem der Ansprüche 11 bis 22, weiterhin aufweisend Ressourcennutzungsbestimmungsmittel (34), welche mit dem Kommunikationsverwaltungssystem gekoppelt sind, wobei die Ressourcennutzungsbestimmungsmittel angeordnet sind zum Empfangen von Daten, welche das Kommunikationsnetzwerk identifizieren, welches durch den Nutzer verwendet wird, und zum Auswerten der Ressourcennutzungserfordernisse bei einer ersten Rate für eine Kommunikation, welche an einen Nutzer geliefert wird, welcher das Heimkommunikationsnetzwerk verwendet, und bei einer zweiten Rate, wenn der Nutzer Roaming nutzt, wobei die zweite Rate unterschiedlich zu der ersten Rate ist.

24. System nach irgendeinem der Ansprüche 11 bis 23, bei welchem das Heimkommunikationsnetzwerk ein Mobilfunknetzwerk aufweist.

25. System nach irgendeinem der Ansprüche 11 bis 24, bei welchem die Kommunikationen, welche an den Nutzer geliefert werden, eine oder mehrere einer Kurznachrichtendienst (SMS)-Nachricht, einer Multimedia-Nachrichtendienst (MMS)-Nachricht und einer WAP-Push-Nachricht aufweisen.

26. System nach irgendeinem der Ansprüche 11 bis 25, bei welchem die Mobiltelekommunikationsvorrichtung ein Mobiltelefon aufweist.

27. Computerprogramm, oder ein Paket von Computerprogrammen, welche einen Satz von Anweisungen aufweisen, welche angeordnet sind zum Veranlassen eines Computers oder einer Folge von Computern, das Verfahren nach irgendeinem der Ansprüche 1 bis 10 auszuführen.

28. Computerlesbares Medium, welches das Computerprogramm von Anspruch 27 aufweist.

## Revendications

1. Procédé de gestion de la remise de communications à au moins un utilisateur d'un dispositif de communication mobile (16A,16B), le dispositif de communication mobile étant capable de recevoir des communications en provenance d'un ou plusieurs fournisseurs de contenu (12) via un réseau de communication de rattachement (18) et étant capable de recevoir des communications en provenance du fournisseur de contenu via au moins un réseau d'itinérance (26) différent dudit réseau de communication de rattachement, le procédé comprenant les étapes de :
détermination d'un réseau de communication utilisé par un utilisateur, en fonction d'une notification indiquant une utilisation du réseau, la notification étant fournie par un système de surveillance (32) conçu pour surveiller un réseau utilisé par le dispositif de communication mobile ;
détermination du fait que le réseau de communication utilisé par l'utilisateur est ledit réseau de communication de rattachement ou ledit réseau d'itinérance ;
identification d'un paramètre de remise pré-spécifié en fonction de la détermination du fait que le réseau de communication utilisé par l'utilisateur est ledit réseau de communication de rattachement ou ledit réseau d'itinérance, le paramètre de remise étant spécifié par un fournisseur de contenu, lequel fournisseur de contenu aune allocation d'utilisation des ressources qui lui est associée, et la remise desdites communications étant déduite de ladite allocation d'utilisation des ressources ; et
remise sélective de communications à l'utilisateur en fonction du paramètre de remise identifié, les communications comprenant un contenu provenant d'un fournisseur de contenu.

2. Procédé selon la revendication 1, comprenant en outre les étapes de :
détermination d'une localisation de l'utilisateur en fonction du réseau de communication qu'utilise l'utilisateur ; et
conservation des informations de localisation concernant l'utilisateur dans une base de données (38),
l'étape de remise sélective de communications à l'utilisateur comprenant l'accès à la base de données pour déterminer la localisation de l'utilisateur et gérer la remise des communications en fonction de la localisation de l'utilisateur.

3. Procédé selon la revendication 1 ou la revendication 2, dans lequel l'étape de remise sélective de communications à l'utilisateur comprend le fait d'empêcher la remise de communications à l'utilisateur s'il est déterminé que l'utilisateur utilise un réseau de communication d'itinérance différent de son réseau de communication de rattachement.

4. Procédé selon la revendication 1 ou la revendication 2, comprenant en outre les étapes de :
obtention d'une utilisation de ressources disponible parmi une utilisation de ressources allouée par le fournisseur de contenu pour la remise de communications à l'utilisateur ; et
comparaison de l'utilisation de ressources disponible à l'utilisation de ressources requise pour la remise de ces communications,
l'étape de remise sélective de communications à l'utilisateur comprenant la gestion de la remise de communications en fonction d'une comparaison de l'utilisation de ressources disponible et de ressources requises pour la remise de communications à l'utilisateur à l'aide d'un réseau d'itinérance.

5. Procédé selon la revendication 4, dans lequel l'étape de remise sélective de communications à l'utilisateur comprend le fait d'empêcher la remise de communications à l'utilisateur utilisant un réseau d'itinérance lorsque l'utilisation de ressources requise pour la remise des communications excède l'utilisation de ressources disponible.

6. Procédé selon la revendication 1, comprenant en outre la fourniture de services de communication à l'utilisateur à la condition que l'utilisateur reçoive des communications.

7. Procédé selon l'une quelconque des revendications précédentes, dans lequel le système de surveillance comprend un Enregistreur de Localisation Nominal (HLR).

8. Procédé selon l'une quelconque des revendications précédentes, dans lequel le réseau de communication de rattachement comprend un réseau cellulaire.

9. Procédé selon l'une quelconque des revendications précédentes, dans lequel les communications remises à l'utilisateur comprennent un message du service de messages courts (SMS) et/ou un message du service de messages multimédia (MMS).

10. Procédé selon l'une quelconque des revendications précédentes, dans lequel le dispositif de communication mobile comprend un téléphone mobile.

11. Système de gestion de la remise de communications à au moins un utilisateur d'un dispositif de communication mobile (16A, 16B), le dispositif de communication mobile étant capable de recevoir des communications en provenance d'un ou plusieurs fournisseurs de contenu (12) via un réseau de communication de rattachement (18) et étant capable de recevoir des communications en provenance du ou des fournisseurs de contenu via au moins un réseau d'itinérance (26) différent dudit réseau de communication de rattachement, le système comprenant :
un système de gestion de communication (14, 46) conçu pour recevoir des communications en provenance de fournisseurs de contenu pour la remise à l'utilisateur ; et
une base de données (38) contenant des données concernant un réseau de communication utilisé par l'utilisateur, la base de données étant couplée à un système de détermination (32) pour déterminer lequel desdits réseaux de communication est utilisé par ledit dispositif de communication mobile, les bases de données étant conçue pour recevoir des indications d'un réseau de communication utilisé par ledit dispositif de communication mobile en provenance du système de détermination, la base de données étant couplée au système de gestion de communication et étant conçue pour fournir audit système de gestion de communication des données indicatives d'un réseau de communication utilisé par un utilisateur,
ledit système de gestion de communication étant conçu pour interroger la base de données afin d'identifier un paramètre de remise pré-spécifié en fonction de la détermination du fait que le réseau de communication utilisé par l'utilisateur est un réseau de communication de rattachement ou un réseau d'itinérance, le paramètre de remise étant spécifié par un fournisseur de contenu, lequel fournisseur de contenu a une allocation d'utilisation des ressources qui lui est associée, et la remise des communications étant déduite de ladite allocation d'utilisation des ressources,
la gestion des communications étant en outre conçue pour gérer la remise de communications à l'utilisateur en fonction du paramètre de remise identifié, les communications comprenant du contenu provenant du fournisseur de contenu.

12. Système selon la revendication 11, dans lequel ledit système de détermination comprend un Enregistreur de Localisation Nominal (HLR).

13. Système selon la revendication 11 ou la revendication 12, dans lequel les communications remises à l'utilisateur comprennent du contenu provenant du fournisseur de contenu.

14. Système selon l'une quelconque des revendications 11 à 13,dans lequel ledit système de détermination est conçu pour déterminer un pays dans lequel se trouve l'utilisateur lorsqu'il est en itinérance, ledit système de gestion de communication étant conçu pour gérer la remise des communications à l'utilisateur en fonction du pays dans lequel se trouve l'utilisateur lorsqu'il est en itinérance.

15. Système selon l'une quelconque des revendications 11 à14, dans lequel ledit système de détermination est conçu pour déterminer un opérateur du réseau d'itinérance utilisé par l'utilisateur lorsqu'il est en itinérance, ledit système de gestion de communication étant conçu pour gérer la remise de communications à l'utilisateur en fonction de l'opérateur du réseau d'itinérance utilisé par l'utilisateur lorsqu'il est en itinérance.

16. Système selon l'une quelconque des revendications 11 à 15, dans lequel ladite base de données comprend en outre au moins une préférence déterminée par l'utilisateur concernant la remise des communications, ledit système de gestion de communication étant conçu pour gérer la remise de communications à l'utilisateur en fonction du réseau de communication utilisé par l'utilisateur et de l'au moins une préférence déterminée par l'utilisateur.

17. Système selon la revendication 16, comprenant en outre une interface pour permettre à l'utilisateur de se connecter à ladite base de données et de gérer lesdites préférences de remise.

18. Système selon la revendication 17, dans lequel ladite interface comprend une option sélectionnable par l'utilisateur pour la suspension de la remise desdites communications.

19. Système selon l'une quelconque des revendications 16 à 18, dans lequel ladite au moins une préférence déterminée par l'utilisateur comprend des préférences concernant une liste de sources de communication différentes depuis lesquelles l'utilisateur pourrait recevoir des communications et des préférences concernant une liste de types de communications différents que l'utilisateur pourrait recevoir.

20. Système selon la revendication 16, dans lequel ledit système de gestion de communication comprend un système de gestion de communication secondaire (48) conçu pour gérer des communications pour l'utilisateur, ledit système de gestion de communication secondaire étant conçu pour recevoir des communications destinées à l'utilisateur, des données provenant de la base de données concernant les préférences de remise de l'utilisateur et des données concernant le réseau de communication utilisé par l'utilisateur, provenant dudit système de détermination, pour déterminer si les communications devraient ou non être remises à l'utilisateur et, si tel est le cas, pour commander un noeud (36) du réseau de communication de façon qu'il remette les communications à l'utilisateur.

21. Système selon la revendication 20, dans lequel ledit système de gestion de communication secondaire est conçu pour recevoir une indication de l'émetteur et du destinataire des communications, et éventuellement les communications, via l'élément de réseau de communication.

22. Système selon la revendication 11, dans lequel ledit système de gestion de communication comprend des outils qui permettent à chaque fournisseur de contenu de définir des règles commandant la remise desdites communications.

23. Système selon l'une quelconque des revendications 11 à 22, comprenant en outre des moyens de détermination d'utilisation des ressources (34) couplés audit système de gestion de communication, lesdits moyens de détermination d'utilisation des ressources étant conçus pour recevoir des données identifiant le réseau de communication utilisé par l'utilisateur et pour évaluer les conditions d'utilisation des ressources à un premier débit pour une communication remise à un utilisateur utilisant le réseau de communication de rattachement et à un deuxième débit lorsque l'utilisateur est itinérant, ledit deuxième débit étant différent dudit premier débit.

24. Système selon l'une quelconque des revendications 11 à 23,dans lequel le réseau de communication de rattachement comprend un réseau cellulaire.

25. Système selon l'une quelconque des revendications 11 à 24,dans lequel les communications remises à l'utilisateur comprennent un ou plusieurs d'un message du service de messages courts (SMS), d'un message du service de messages multimédia (MMS) et d'un message WAP Push.

26. Système selon l'une quelconque des revendications 11 à 25,dans lequel le dispositif de communication mobile comprend un téléphone mobile.

27. Programme informatique, ou suite de programmes informatiques, comprenant un ensemble d'instructions conçu pour faire en sorte qu'un ordinateur, ou une suite d'ordinateurs, exécute le procédé selon l'une quelconque des revendications 1 à 10.

28. Support lisible par un ordinateur comprenant le programme informatique de la revendication 27.
